# EUROPÄISCHE PATENTSCHRIFT

(11) **EP 1 762 371 B1**
(45) Veröffentlichungstag und Bekanntmachung des Hinweises auf die Patenterteilung: **30.06.2010**
(21) Anmeldenummer: 06018057.7
(22) Anmeldetag: 30.08.2006
(51) Int. Cl.: B29C 71/02, F16D 69/02, F16D 69/00

(54) **Vorrichtung zum Härten von Reibbelägen mit latentem Wärmespeicher**
Apparatus for curing friction linings with latent heat accumulator
Appareil pour la réticulation de garnitures de friction avec accumulateur de chaleur latente

(30) Priorität: 07.09.2005 DE 102005042425
(43) Veröffentlichungstag der Anmeldung: 14.03.2007
(73) Patentinhaber: TMD Friction Services GmbH, 51381 Leverkusen (DE)
(72) Erfinder: Hogenkamp, Wolfgang, 42855 Remscheid (DE)
(74) Vertreter: Müller, Eckhard

(56) Entgegenhaltungen:
- EP-A1- 1 063 443
- DE-A1- 4 123 723
- DE-A1- 4 445 882
- DE-A1- 10 145 442

## Beschreibung

Die vorliegende Erfindung betrifft eine Vorrichtung sowie ein Verfahren zum Härten von Reibbelägen, insbesondere für Brems- oder Kupplungseinrichtungen von Fahrzeugen.

### technologischer Hintergrund

Zur Herstellung von Reibbelägen, insbesondere für Brems- oder Kupplungseinrichtungen von Fahrzeugen, wird eine pulverförmige, Bindemittel enthaltende Rohmasse in einer Pressform unter Temperatureinwirkung mittels eines Pressvorgangs verdichtet und anschließend einem Härtevorgang unterzogen.

Typischerweise werden die nach Durchlaufen des Heißpressvorgangs formstabilen Reibbeläge aus den Pressformen entnommen und zum Aushärten einem Durchlaufofen zugeführt. Je nach Art des Pressvorgangs und der Zusammensetzung des verpressten Reibbelags werden die Reibbeläge beim Aushärten eingespannt oder frei in einem erhitzten Luftstrom ausgehärtet. Beim Härtevorgang vernetzen die im Reibbelag enthaltenen Bindemittel und sorgen somit für die erforderliche Endfestigkeit beziehungsweise Endkompressibilität des Reibbelags.

Beim Härtevorgang werden die Reibbeläge und die zumeist beim Pressvorgang mit den Reibbelägen verpressten Trägerplatten auf eine Härtetemperatur aufgeheizt und über ein vorgegebenes Härte-Zeitintervall auf dieser Härtetemperatur gehalten. Da Luft ein relativ schlechter Wärmeleiter ist, erfordert eine Härteprozedur, bei der die Reibbeläge lediglich von einem erhitzten Luftstrom umgeben werden, eine relativ lange Härtezeit.

### Stand der Technik

Aus der DE 101 45 442 A1 ist beispielsweise ein Härten von Reibbelägen bekannt, bei dem die Beläge gesondert in einem sogenannten Spannrahmen zum Aushärten eingespannt werden. Es ist ferner bekannt, die Reibbeläge zwischen beheizbare Platten einzuspannen und die von den Heizplatten erzeugte oder aufgenommene Wärme direkt von den Heizplatten auf die Reibbelägen zu überführen.

Aus der DE 44 45 882 A1 ist eine Vorrichtung entsprechend dem Oberbegriff des Anspruchs 1 zur thermischen Behandlung von Reiboberflächen bekannt, wobei eine Heizfläche eines Heizaggregates in Anlageposition mit dem Reibbelag bringbar und auf eine Härtetemperatur des Reibbelages aufheizbar ist. Das Heizaggregat weist Heizpatronen auf, welche zur Abgabe von Wärme im Bereich der Härtetemperatur ausgebildet sind.

Weiterhin ist aus der DE 41 23 723 A1 eine hydraulische Presse zum Warmformpressen von Reibbelägen bekannt, mit einem oberen und unteren Formteil mit oberer und unterer Heizplatte, welche jeweils ein Heizelement besitzen.

Ferner ist bekannt, die Reibbeläge zwischen Elektroden anzuordnen, die ihrerseits an eine schaltbare Stromquelle angeschlossen werden. Hierdurch können die Reibbeläge einer elektrischen Spannung ausgesetzt werden und mittels eines durch den Belag fließenden elektrischen Stroms von innen heraus gleichmäßig erhitzt werden. Das Härten mittels direkt beheizbarer Kontaktplatten beziehungsweise über die Zuführung eines wärmeerzeugenden Stroms ermöglicht zwar ein gut kontrollierbares und gleichmäßiges Aufheizen der Reibbeläge auf die Härtetemperatur; solche aktiv heizenden Härteeinrichtungen sind jedoch relativ aufwendig, haben mitunter einen hohen Wartungsaufwand, erfordern bestimmte Sicherheitsvorkehrungen und sind für eine kostengünstige Massenproduktion aufgrund eines limitierten Durchsatzes nur bedingt geeignet.

### Aufgabe der Erfindung

Der vorliegenden Erfindung liegt demgegenüber die Aufgabe zugrunde, eine Vorrichtung zum Härten der Reibbeläge der eingangs genannten Art dahingehend zu verbessern, dass ein kontrolliertes, gleichmäßiges und gleich bleibendes Erwärmen von Reibbelägen während des Härtevorgangs erzielt wird.

### Erfindung und vorteilhafte Wirkungen

Die der Erfindung zugrunde liegende Aufgabe wird mit einer Vorrichtung gemäß Patentanspruch 1 und einem Verfahren gemäß Patentanspruch 16 gelöst. Weitere vorteilhafte Ausführungsformen der Erfindung sind in den Unteransprüchen angegeben.

Die erfindungsgemäße Vorrichtung zum Härten von Reibbelägen, insbesondere von Reibbelägen von Brems- oder Kupplungseinrichtungen von Fahrzeugen, verfügt über zumindest ein Wärmeübertragungselement, welches in Anlageposition mit zumindest einem Reibbelag bringbar und auf eine Härtetemperatur des Belags aufheizbar ist. Dieses Wärmeübertragungselement ist mit einem Wärmespeichermaterial befüllbar, das im Bereich der Härtetemperatur des Reibbelages zur Abgabe oder Aufnahme latenter Wärme durch Änderung des Aggregatzustandes, ausgebildet ist.

Demgemäß hat das mit dem Wärmespeichermaterial gefüllte Wärmeübertragungselement die Funktion eines latenten Wärmespeichers. Typischerweise weist das Wärmespeichermaterial im Bereich der Härtetemperatur einen Phasenübergang erster Ordnung, vorzugsweise einen Schmelzpunkt, auf. Die zum Härten des Belags notwendige Wärmemenge wird direkt über das Wärmeübertragungselement in den typischerweise zwischen zwei Wärmeübertragungselementen eingespannten Reibbelag eingebracht.

Die Wärmeübertragungselemente haben hierbei eine deutlich höhere Wärmeleitfähigkeit als zum Beispiel Luft und ermöglichen so ein schnelles und gleichmäßiges Aufheizen der Reibbeläge auf die erforderliche Härtetemperatur.

Typischerweise werden die Wärmeübertragungselemente passiv, zum Beispiel mittels eines heißen Luftstroms, für eine gewisse Dauer auf eine vorgegebene Temperatur erhitzt, so dass das Wärmespeichermaterial nahezu vollständig von einem ersten, typischerweise festen Aggregatzustand, in einen zweiten, typischerweise flüssigen Aggregatzustand, übergeht. Nach einem Aufheizen des Wärmeübertragungselementes und einem Verflüssigen des Wärmespeichermaterials wird der Reibbelag mit dem Wärmeübertragungselement in eine Anlageposition gebracht, wodurch die im Wärmeübertragungselement gespeicherte Wärmemenge dem Reibbelag unter Beibehaltung und im wesentlichen Einhaltung der Härtetemperatur zugeführt werden kann.

Bei einer Abgabe von Wärme an den Reibbelag unterliegt das Wärmespeichermaterial typischerweise einem Phasenübergang, bei dem latente Wärme frei und an das Wärmeübertragungselement beziehungsweise an den Reibbelag abgegeben wird. Durch das Freiwerden dieser latenten Wärme wird effektiv verhindert, dass die Temperatur des Wärmeübertragungselements beziehungsweise die Temperatur des Wärmespeichermaterials nicht auf ein Niveau unterhalb der Härtetemperatur absinkt. Hierdurch kann vor allem ein schnelles und gleichmäßiges Aufheizen in Anlageposition befindlicher Reibbeläge auf die Härtetemperatur sowie ein dauerhaftes Halten der Reibbeläge im Bereich der Härtetemperatur erfolgen.

Die erfindungsgemäße Vorrichtung eignet sich insbesondere zum Einsatz in Durchlauföfen, bei denen die Wärmeübertragungselemente selbst durch umgebene Heißluft erhitzt werden. Da in solchen Heißluftöfen eine exakte Temperatureinstellung nur schwer zu erreichen ist, ermöglichen die erfindungsgemäßen Wärmeübertragungselemente mit dem Wärmespeichermaterial das exakte Einstellen einer vorgegebenen Temperatur für den Härtevorgang, die selbst bei kurzzeitigen Schwankungen der umgebenen Heißluft und insbesondere bei einem In-Anlageposition-Bringen der Reibbeläge mit den Wärmeübertragungselementen im Wesentlichen konstant bleibt.

Selbst in solchen Fällen, in denen die die Wärmeübertragungselemente umgebende Heißluft eine höhere Temperatur als die Härtetemperatur aufweist, ist das Wärmespeichermaterial zunächst zur Aufnahme latenter Wärme ausgebildet, bevor ein Erhitzen des Wärmespeichermaterials beziehungsweise der Wärmeübertragungselemente auf eine Temperatur oberhalb der Härtetemperatur erfolgt.

Nach einer ersten bevorzugten Ausführung der Erfindung ist vorgesehen, dass der zumindest eine Reibbelag zwischen das zumindest eine Wärmeübertragungselement und ein Grundelement einspannbar ist. Demzufolge ist die Vorrichtung als eine Spannvorrichtung ausgebildet, in die vorzugsweise mehrere Reibbeläge zwischen Wärmeübertragungselemente und/oder ein Grundelement einspannbar sind, so dass der Härtevorgang der Reibbeläge unter einem vorgegebenen Druck durchführbar ist. Hierbei kann insbesondere eine beim Härtevorgang erfolgende Ausdehnung beziehungsweise eine auf die Reibbeläge einwirkende Kompression kontrolliert beziehungsweise eingestellt werden.

Es ist weiterhin von Vorteil, dass mehrere in Reihe angeordnete Wärmeübertragungselemente zum Einspannen zumindest eines Reibbelags zwischen benachbarten Wärmeübertragungselementen vorgesehen sind. Demgemäß können Wärmeübertragungselemente und Reibbeläge jeweils abwechselnd aufeinander gestapelt und letztlich mittels einer entsprechenden Spannvorrichtung eingespannt werden. Somit wird jeder Reibbelag sowohl mit seiner Unterseite als auch mit seiner Oberseite in Anlageposition mit einem benachbarten Wärmeübertragungselement gebracht.

Entsprechendes gilt für die Wärmeübertragungselemente, die vorzugsweise gleichermaßen zur Abgabe von Wärme an je zwei in Anlageposition befindliche Reibbeläge ausgebildet sind.

Nach einer weiteren Ausführungsform der Erfindung ist das Wärmeübertragungselement als eine, vorzugsweise planparallele, Platte mit zumindest einem Hohlraum zur Aufnahme des Wärmespeichermaterials ausgebildet. Die planparallele Ausgestaltung der Wärmeübertragungselemente dient vor allem einer guten Wärmeübertragung zu den eingespannten Reibbelägen und ist hinsichtlich herstellungstechnischer Aspekte relativ kostengünstig.

Der Hohlraum des Wärmeübertragungselements dient der Aufnahme des Wärmespeichermaterials und ist vorzugsweise an die äußere Geometrie des Wärmeübertragungselements angepasst. Der Hohlraum oder die Hohlräume ist beziehungsweise sind derart ausgestaltet, dass möglichst große Teile des Wärmeübertragungselements als Hohlkörper ausgebildet sind. Das Wärmeübertragungselement kann hierbei entweder mehrere einzelne Hohlräume oder aber einen einzigen zusammenhängenden, gegebenenfalls verzweigten Hohlraum aufweisen.

Nach einer weiteren Ausführungsform der Erfindung ist vorgesehen, dass das Wärmeübertragungselement als Hohlprofil ausgebildet ist. Vorzugsweise besteht das Wärmeübertragungselement aus Aluminium. Die Verwendung von Aluminium beziehungsweise einer Hohlprofilbauweise ermöglicht eine kostengünstige Herstellung von Wärmeübertragungselementen mit relativ guten Wärmeleitungseigenschaften, die zugleich eine erforderliche Statik beziehungsweise Festigkeit aufweisen, welche insbesondere für die Ausübung eines Spanndrucks oder einer Kompression auf die Reibbeläge erforderlich ist.

Nach einer weiteren bevorzugten Ausführungsform der Erfindung ist der Hohlraum als eine, mittels eines Deckels verschließbare Aufnahme beziehungsweise Öffnung des Wärmeübertragungselements ausgebildet. Die verschließbare Öffnung kann beispielsweise mittels einer Schraube verschraubt werden. Eine derartige Ausgestaltung ermöglicht beispielsweise sowohl ein Befüllen als auch ein Entleeren sowie ein Wiederbefüllen des Hohlraums, zum Beispiel mit unterschiedlichen Wärmespeichermaterialien, die für unterschiedliche Härtetemperaturen unterschiedlicher Reibbeläge mit verschiedenen Zusammensetzungen ausgelegt sind.

Weiterhin kann vorgesehen sein, dass der Hohlraum eine verschweißbare Öffnung des Wärmeübertragungselements aufweist. Das Verschweißen des Hohlraums nach Befüllen des Wärmeübertragungselements mit dem Wärmespeichermaterial verhindert insbesondere ein unbeabsichtigtes Austreten des Wärmespeichermaterials im Betrieb. Bei dieser Ausführung werden die Wärmeübertragungselemente durch entsprechendes Befüllen mit dem Wärmespeichermaterial auf eine Härtetemperatur eingestellt, die durch die Phasenübergangstemperatur des Wärmespeichermaterials vorgegeben ist, bei der das Material zur Aufnahme beziehungsweise Abgabe latenter Wärme ausgebildet ist.

Von Vorteil ist weiterhin, dass die Größe und/oder Geometrie des Hohlraums der Wärmeübertragungselemente an die Wärmekapazität des Wärmespeichermaterials und an die Größe und/oder Geometrie des Reibbelags angepasst ist beziehungsweise sind. Hierdurch wird insbesondere erreicht, dass beispielsweise die im Wärmeübertragungselement speicherbare Wärmeenergie dazu ausreicht, einen eingespannten beziehungsweise mehrere eingespannte Reibbeläge auf die Härtetemperatur aufzuheizen, ohne dass die Temperatur der Wärmeübertragungselemente hierbei auf ein Niveau unterhalb der Härtetemperatur absinkt.

Nach einer weiteren bevorzugten Ausführungsform der Erfindung ist vorgesehen, dass mittels einer Spannvorrichtung über den Verstellweg eines Wärmeübertragungselements eine vorgegebene Kompression auf ein zwischen benachbarten Wärmeübertragungselementen oder zwischen Wärmeübertragungselement und Grundelement eingespannten Reibbelag ausübbar ist. Die Kompression beziehungsweise ein auf den eingespannten Reibbelag auszuübender Druck wird hierbei durch den Verstellweg der Spannvorrichtung beziehungsweise durch den Verstellweg des Wärmeübertragungselements bestimmt.

Die Spannvorrichtung wirkt hierbei direkt auf eines der Wärmeübertragungselemente oder auf das Grundelement ein. Insbesondere kann durch diese wegabhängige Einstellung der Kompression beziehungsweise des Anpressdrucks eine hohe Maßhaltigkeit der Reibbeläge erzielt werden. Hierbei dient stets die Ausdehnung der Reibbeläge, nicht aber eine auf die Reibbeläge auszuübende Kompression oder Presskraft als Steuer- oder Regelungsparameter.

Von Vorteil kann weiterhin zum Festlegen des Verstellwegs der Wärmeübertragungselemente zumindest ein Distanzelement zwischen benachbarten Wärmeübertragungselementen und/oder zwischen Wärmeübertragungselement und Grundelement vorgesehen sein. Solche Distanzelemente zeichnen sich durch eine im Vergleich zum Reibbelag äußerst niedrige Kompressibilität und hohe Formstabilität aus. Sie begrenzen das Zusammenführen der Wärmeübertragungselemente und somit das Zusammendrücken der dazwischen befindlichen Reibbeläge. Die Distanzelemente limitieren somit den Verstellweg der Wärmeübertragungselemente und sorgen dafür, dass eingespannte Reibbeläge im Wesentlichen nicht über ein vorgegebenes Maß hinaus komprimiert werden können.

Weiterhin kann zum Festlegen und/oder Begrenzen des Verstellweges die Spannvorrichtung zumindest einen Anschlag aufweisen, der in ähnlicher Weise wie das Distanzelement zur Begrenzung des Verstellwegs zumindest eines Wärmeübertragungselementes dient.

Von Vorteil ist weiterhin, dass zwischen benachbarten Wärmeübertragungselementen mindestens zwei Reibbeläge nebeneinander anordenbar sind, so dass eine Vielzahl von Reibbelägen gleichzeitig in die Spannvorrichtung eingespannt werden können. Die Aufnahme mehrerer Reibbeläge zwischen benachbarten Wärmeübertragungselementen erhöht die Durchsatzrate und ermöglicht eine möglichst effiziente Nutzung und Auslastung des Spannrahmens.

Nach einer weiteren vorteilhaften Ausführungsform der Erfindung verfügt das zumindest eine Wärmeübertragungselement über zumindest einen Führungsbolzen, der zum Eingreifen in zumindest ein Langloch der Spannvorrichtung ausgebildet ist. Demgemäß können die Wärmeübertragungselemente beweglich, aber fest an der Vorrichtung beziehungsweise an der Spannvorrichtung angebracht werden, so dass sie entsprechend der Ausgestaltung des Langlochs der Spannvorrichtung verschiebbar sind.

Dies ist insbesondere beim Einspannen der Reibbeläge in der Spannvorrichtung als auch beim Entnehmen der Reibbeläge aus der Spannvorrichtung von Vorteil. Die Wärmeübertragungselemente verbleiben hierbei stets in der Spannvorrichtung und erfordern kein separates Herausnehmen oder gezieltes Platzieren in der Vorrichtung beim Einsetzen oder Herausnehmen der Reibbeläge vor oder nach dem Härteprozess.

Nach einer weiteren bevorzugten Ausführungsform der Erfindung ist das zumindest eine Wärmeübertragungselement beim Aufheben einer Kompression oder einer Spannkraft unter Einwirkung seiner Gewichtskraft zur Freigabe eines eingespannten Reibbelags ausgebildet. Vorzugsweise werden die Wärmeübertragungselemente mitsamt den dazwischen befindlichen Reibbelägen entgegen der wirkenden Gewichtskraft in der Spannvorrichtung eingespannt.

Wird nach dem erfolgten Härtevorgang die Spannvorrichtung gelöst, so verschieben sich die Wärmeübertragungselemente vorzugsweise längs der Langlöcher der Spannvorrichtung in Richtung der wirkenden Gewichtskraft und geben somit die dazwischen angeordneten Reibbeläge zum Entnehmen aus der Spannvorrichtung frei.

Für die erfindungsgemäße Vorrichtung und die dazugehörigen Wärmeübertragungselemente sind als Wärmespeichermaterialien Zink, Zinn, Aluminium, Legierungen mit Zink-, Zinn- und/oder Aluminiumbestandteilen und/oder Wärmespeichermaterialien auf Salz- oder Paraffinbasis vorgesehen.

In einem weiteren Aspekt betrifft die Erfindung ein Verfahren zum Härten zumindest eines Reibbelags bei einer Härtetemperatur unter Verwendung zumindest eines mit einem Wärmespeichermaterial befüllbaren Wärmeübertragungselements. Das Wärmespeichermaterial weist hierbei eine Phasenübergangstemperatur im Bereich der Härtetemperatur auf. Hierbei wird das Wärmeübertragungselement zunächst solange aufgeheizt, bis das Wärmespeichermaterial zumindest teilweise unter Aufnahme latenter Wärme von einer ersten Phase in eine zweite Phase übergegangen ist.

Die erste Phase des Wärmespeichermaterials ist typischerweise der feste Aggregatzustand und die zweite Phase typischerweise der flüssige Aggregatzustand des Wärmespeichermaterials. Falls geeignet, können die erste oder die zweite Phase auch ein gasförmiger oder anders gearteter Aggregatzustand beziehungsweise Phasenzustand sein, bei dessen Übergang das Material zur Aufnahme beziehungsweise Abgabe latenter Wärme geeignet ist.

Wenn das Wärmeübertragungselement auf ein erforderliches Maß aufgeheizt und genügend latente Wärme vom Wärmespeichermaterial aufgenommen wurde, wird ein zu härtender Reibbelag in eine Anlageposition mit dem zumindest einen Wärmeübertragungselement gebracht. In dieser Anlage- oder Kontaktposition zwischen Wärmeübertragungselement und Reibbelag wird dann eine Wärmemenge vom Wärmeübertragungselement unter Ausnutzung einer durch Übergang von der zweiten in die erste Phase des Wärmespeichermaterials freigesetzten latenten Wärme in den Reibbelag eingebracht.

Hierbei wird die Temperatur des Wärmeübertragungselements im Wesentlichen konstant gehalten, so dass ein zügiges und gleichmäßiges Erwärmen des Reibbelags auf die Härtetemperatur und Einhalten der Härtetemperatur erfolgen kann.

Weiterhin ist vorgesehen, dass die Temperatur des Wärmeübertragungselementes beim Aufheizen durch die Aufnahme von Wärmeenergie des Wärmespeichermaterials beim Übergang von der ersten in die zweite Phase im wesentlichen durch die Härtetemperatur beziehungsweise die Phasenübergangstemperatur des Wärmespeichermaterials begrenzt ist.

Zudem ist vorgesehen, dass das Wärmeübertragungselement als passives Wärmeübertragungselement ausgebildet ist und extern, insbesondere durch Luft in einem Ofen, aufgeheizt wird. Von Vorteil ist hierbei, wenn die Temperatur der umgebenden Luft zum Aufheizen des Wärmeübertragungselements höher als die Härtetemperatur ist.

Durch den mittels Wärmeübertragungselement nebst Wärmespeichermaterial gebildeten latenten Wärmespeicher wird zum einen effektiv verhindert, dass selbst bei einer Heiztemperatur oberhalb der Härtetemperatur die Wärmeübertragungselemente stets nur bis zur Härtetemperatur erhitzt werden. Zum anderen verhindert der latente Wärmespeicher ein Absinken der Temperatur des Wärmeübertragungselements, wenn beispielsweise vom Wärmeübertragungselement mehr Wärmeenergie an eingespannte Reibbeläge abgegeben wird als es von der umgebenden Heißluft aufnehmen kann. Dies kann vor allem direkt nach dem Einspannen relativ kalter Reibbeläge zwischen aufgeheizte Wärmeübertragungselemente oftmals der Fall sein.

Von Vorteil ist weiterhin, dass das Aufheizen des zumindest einen Wärmeübertragungselements in einem Durchlaufofen und das Anordnen der Reibbeläge in die Anlageposition beziehungsweise das Herausnehmen von Reibbelägen aus der Vorrichtung außerhalb des Durchlaufofens stattfinden kann. Durch die Ausgestaltung der Wärmübertragungselemente als latente Wärmespeicher wird insbesondere erreicht, dass selbst beim Einspannen von Reibbelägen außerhalb des Durchlaufofens die Wärmeübertragungselemente stets eine Temperatur im Bereich der Härtetemperatur aufweisen.

Die Verwendung der erfindungsgemäßen Wärmeübertragungselemente ermöglicht somit einen hohen Durchsatz von Reibbelägen und sogleich ein hohes Maß an Genauigkeit bezüglich des Einstellens der Härtetemperatur während der Dauer des Härtevorgangs. Der gesamte Härtevorgang kann hierdurch zur Erzeugung von Reibbelägen gleich bleibender Qualität und Güte besonders einfach und elegant geregelt und gesteuert werden.

### Ausführungsbeispiel

Weitere Ziele, Merkmale und vorteilhafte Ausführungen der Erfindung sind nachfolgend anhand der Zeichnungen erläutert und beschrieben. Dabei bilden alle bildlich dargestellten und/oder beschriebenen Merkmale in beliebiger sinnvoller Kombination den Gegenstand der vorliegenden Erfindung, auch unabhängig von den in den Ansprüchen und deren Rückbeziehung angegebenen Merkmalen.

Es zeigen:
- Figur 1: eine schematische Querschnittsdarstellung eines zwischen Grundelement und Wärmeübertragungselement eingespannten Reibbelags,
- Figur 2: eine Querschnittsdarstellung eines Wärmeübertragungselements,
- Figur 3: eine Querschnittsdarstellung einer Spannvorrichtung mit zahlreichen Wärmeübertragungselementen,
- Figur 4: eine seitliche Darstellung der Spannvorrichtung gemäß Figur 3 und
- Figur 5: ein Flussdiagramm des Härteverfahrens.

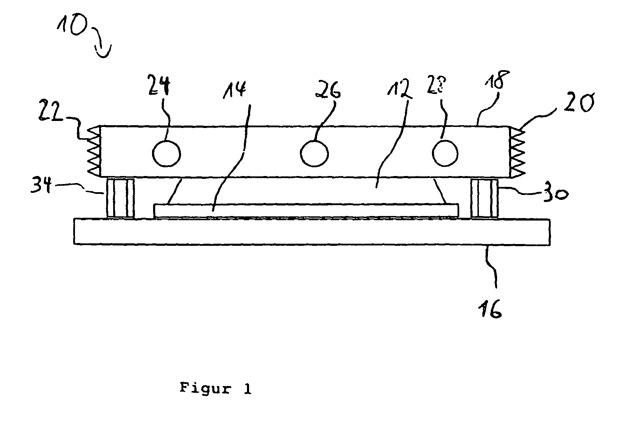

Figur 1 zeigt eine Querschnittsdarstellung einer Vorrichtung 10 zum Härten eines Reibbelags 12, der mit einer Trägeplatte 14 verpresst wurde. Während des nachfolgenden Härtevorgangs wird der bereits formstabile Härtebelag 12 auf eine vorgegebene Härtetemperatur aufgeheizt, bei der ein Bindemittel, wie beispielsweise Phenolharz, einzelne Reibbelagbestandteile durch Vernetzung miteinander verbindet.

Zur Wärmeübertragung auf den Reibbelag 12 dient hierbei das Wärmeübertragungselement 18, welches mit einem Wärmespeichermaterial befüllbar ist. Hierzu verfügt das Wärmeübertragungselement 18 über mehrere Hohlräume 24, 26, 28, die in der Querschnittsdarstellung als kreisrunde Öffnungen dargestellt sind. Diese Öffnungen oder Hohlräume 24, 26, 28 sind vorzugsweise mittels eines Deckels, wie zum Beispiel einer Schraube, verschließbar, oder werden nach dem Befüllen der Hohlräume 24, 26, 28 mit dem Wärmespeichermaterial zugeschweißt.

Das Wärmespeichermaterial ist im Bereich der Härtetemperatur des Reibbelags 12 zur Abgabe oder Aufnahme latenter Wärme ausgebildet und bildet somit zusammen mit dem Wärmeübertragungselement 18 einen Latentwärmespeicher.

Das Wärmeübertragungselement 18 ist als passives, beispielsweise durch einen Luftstrom erwärmbares Element ausgebildet. Vorzugsweise wird die gesamte Vorrichtung 10 in einem Durchlaufofen erhitzt, wobei der Reibbelag 12 und die Trägerplatte 14 außerhalb des Durchlaufofens in die Vorrichtung 10 eingespannt beziehungsweise aus der Vorrichtung 10 entnommen werden können. Der Latentwärmespeicher sorgt hierbei selbst während der Entnahme oder des Einspannens von Reibbelag 12 und Trägerplatte 14 dafür, dass die Temperatur des Wärmeübertragungselements 18 im Wesentlichen nicht auf ein Niveau unterhalb der Härtetemperatur absinkt.

Werden Reibbelag 12 und Trägerplatte 14 nach dem Pressvorgang in der Vorrichtung 10 eingespannt und liegt deren Temperatur weit unterhalb der Härtetemperatur, so wird zunächst aufgrund des hohen Temperaturunterschieds zwischen Wärmeübertragungselement 18 und Reibbelag 12 eine relativ große Wärmemenge vom Wärmeübertragungselement 18 auf den Reibbelag 12 übertragen, ohne dass es hierbei zu einer wesentlichen Abkühlung des Wärmeübertragungselementes 18 unter die Härtetemperatur kommt.

Die zum Aufheizen des Reibbelags 12 erforderliche Wärmemenge wird vielmehr durch das Freisetzen latenter Wärme des Wärmespeichermaterials zur Verfügung gestellt. Das Wärmespeichermaterial unterliegt hierbei zumeist einem Phasenübergang von flüssig nach fest.

Mit fortdauerndem Aufenthalt im Durchlaufofen nimmt das Wärmeübertragungselement 18 insbesondere über die Heizrippen 20, 22 wieder ein erforderliches Maß an Wärmeenergie auf, die zum einen dazu dient, den eingespannten Reibbelag 12 weiter bis hin zur Härtetemperatur aufzuheizen und diesen dort zu halten und zum anderen das mittlerweile im Wesentliche im festen Aggregatzustand befindliche Wärmespeichermaterial unter Zuführung latenter Wärme wieder zu verflüssigen.

Die umgebende Luft im Durchlaufofen kann abhängig von der Verweildauer der Vorrichtung 10 im Durchlaufofen auch deutlich oberhalb der Härtetemperatur für den Reibbelag 12 liegen. Die wärmespeichernde Funktion des Wärmespeichermaterials verhindert hierbei im Wesentlichen ein Aufheizen des Reibbelags 12 auf ein Niveau oberhalb der vorgegebenen Härtetemperatur. Vorzugsweise sind die Verweildauer der Vorrichtung 10 im Heizofen, die Wärmekapazität des Wärmeübertragungselements 18 und die des darin eingefüllten Wärmespeichermaterials sowie die Geometrie der Anordnung und die geometrische Ausgestaltung des Wärmeübertragungselements 18 derart aufeinander angepasst, dass ein Erwärmen beziehungsweise Abkühlen des Wärmeübertragungselements 18 auf einen Temperaturbereich außerhalb des Bereichs der Härtetemperatur beim Durchlaufen eines Härtezyklusses des Durchlaufofens im wesentlichen verhindert wird.

Weiterhin sind zwei Distanzelemente 30, 34 zwischen dem Wärmeübertragungselement 18 und dem Grundelement 16 angeordnet. Insbesondere wenn der Reibbelag 12 nicht frei, sondern unter einer Druckeinwirkung gehärtet wird, ermöglichen diese Distanzelemente 30, 34 das Einstellen einer wegdefinierten Kompression, die während des Härtevorgangs auf den Reibbelag 12 und die Trägerplatte 14 einwirkt.

Mittels der Distanzelemente 30, 34 kann somit der beim Härtevorgang zu komprimierende Reibbelag 12 bereits vor dem eigentlichen Härtevorgang und natürlich während des Härtevorgangs dauerhaft auf sein vorgegebenes Endmaß komprimiert beziehungsweise verdichtet werden. Eine Kontrolle beziehungsweise Steuerung einer Kompression des Reibbelags 12 während des Härtevorgangs ist daher fortan nicht mehr nötig.

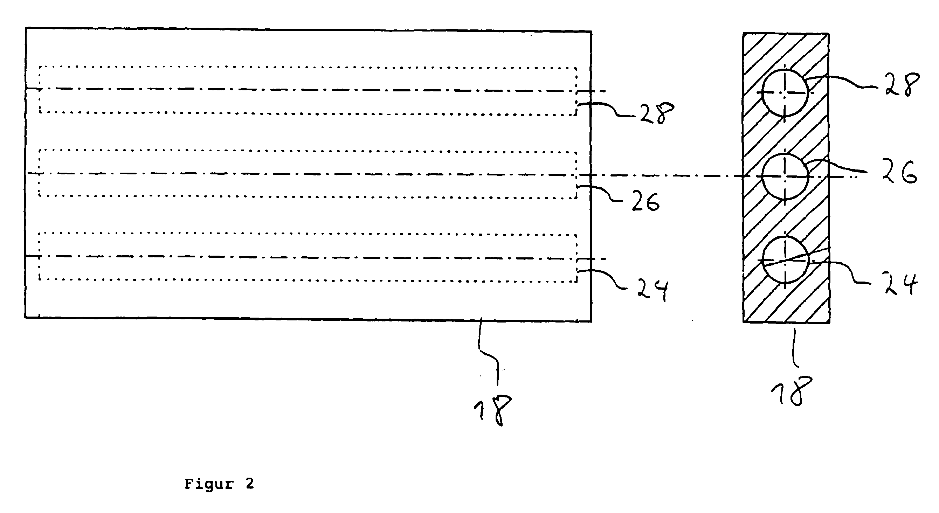

Figur 2 zeigt zwei Querschnittsdarstellungen eines Wärmeübertragungselements 18, welches über drei separate Hohlräume 24, 26, 28 verfügt. Die Hohlräume 24, 26, 28 sind hierbei als zylindrische Bohrungen ausgestaltet und nahezu gleichmäßig voneinander beabstandet, so dass eine möglichst homogene Wärmeverteilung und Wärmeübertragung innerhalb des Wärmeübertragungselementes 18 stattfinden kann. Die zylindrischen Hohlräume 24, 26, 28 können hierbei beispielsweise nach dem Befüllen mit dem Wärmespeichermaterial, wie zum Beispiel Zink oder Zink enthaltende Legierungen, entweder mittels eines Schließmechanismusses, wie zum Beispiel eines Schraubverschlusses, wiederverschließbar oder aber zum Beispiel mittels Verschweißen verschlossen werden.

Insbesondere ein Verschweißen der Öffnungen 24, 26, 28 erscheint im Hinblick auf ein dauerhaftes und sicheres Verschließen vorteilhaft. Ein unbeabsichtigtes Austreten von Wärmespeichermaterial während des Betriebs der Vorrichtung wird hiermit nahezu gänzlich ausgeschlossen. Die die Hohlräume 24, 26, 28 umschließende Struktur des Wärmeübertragungselementes 18 verfügt über eine erforderliche Stabilität und Festigkeit, so dass diese auch unter unterschiedlichen Temperaturen und insbesondere Temperaturschwankungen keiner wesentlichen Formänderung unterliegt.

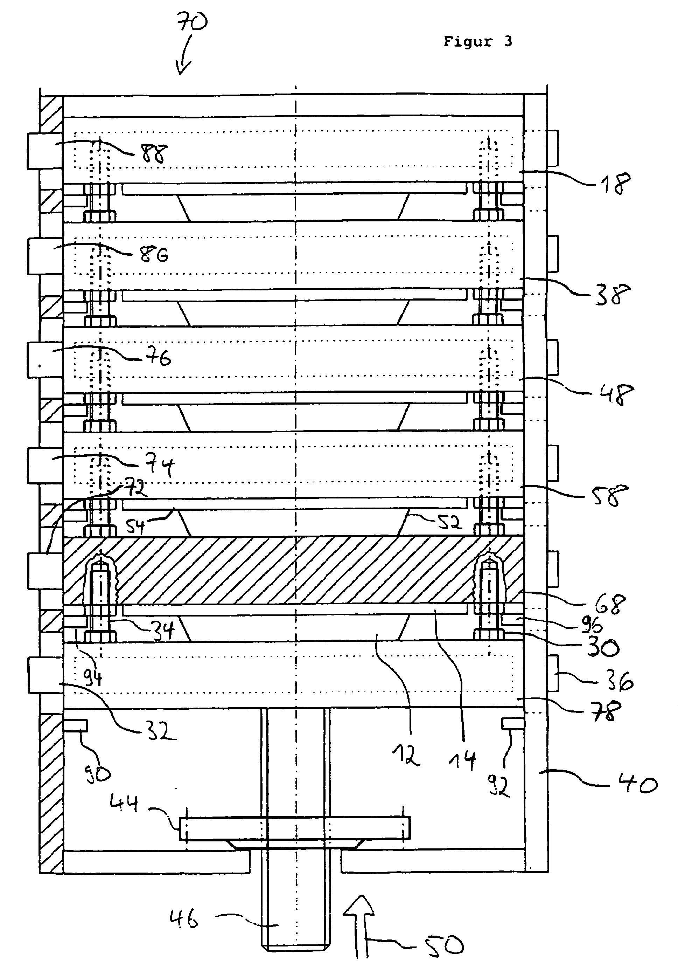

Figur 3 zeigt eine Querschnittsdarstellung einer Spannvorrichtung 70, in der mehrere Wärmeübertragungselemente 18, 38, 48, 58, 68, 78 in Reihe übereinander angeordnet sind. Zwischen den Wärmeübertragungselementen 18, 38, 48, 58, 68, 78 ist jeweils ein Reibbelag 12, 52 mit dazugehöriger Trägerplatte 14, 54 angeordnet. Die die Presskraft einleitende Schubstange 46 steht in direkter Wirkverbindung mit dem untersten Wärmeübertragungselement 78 und dient dem Einleiten einer Kraft 50 auf die übereinander angeordneten Reibbeläge 12, 54 und Wärmeübertragungselemente 78, 68, 58, 48, 38, 18. Vorzugsweise wird das Komprimieren der Reibbeläge 12, 52 wegabhängig gesteuert und kann daher bereits vor dem eigentlichen Beginn des Härtevorgangs, sogar außerhalb des Durchlaufofens erfolgen.

Der Spannrahmen 40 dient zum einen dem Einspannen von Reibbelag-Trägerplattenpaaren 12, 14 und 52, 54 zwischen benachbarten Wärmeübertragungselementen 78, 68, 58, 48, 38, 18, wobei der Kolben 46 mittels eines Feststellelements 44 am Spannrahmen 40 arretiert werden kann. Zum anderen dient der Spannrahmen 40 dem Halten und Anordnen der einzelnen Wärmeübertragungselemente 78, 68, 58, 48, 38, 18 mittels entsprechender Führungslöcher oder Langlöcher 62, 64, 66, 80, 82, 84, in denen die Wärmeübertragungselemente 78, 68, 58, 48, 38, 18 anhand von Führungsbolzen 32, 36, 72, 74, 76, 86, 88 verschiebbar sind.

Beispielsweise verfügt das Wärmeübertragungselement 78 linksbeziehungsweise rechtsseitig über je einen Führungsbolzen 32, 36, von denen der Führungsbolzen 32 entlang dem Langloch 62 beweglich gelagert ist. Auf diese Art und Weise sind die Wärmeübertragungselemente 78, 68, 58, 48, 38, 18 am Spannrahmen 40 angeordnet und können zum Einspannen und zum Entnehmen zu härtender oder fertig ausgehärteter Reibbeläge 12, 52 nach oben oder nach unten bewegt werden.

Hierbei sind vorzugsweise weitere Anschläge 90, 92 an der Innenseite des Spannrahmens 40 angeordnet. Beispielsweise bilden die beiden Anschläge 90, 92 einen links- und rechtsseitigen unteren Anschlag für das Wärmeübertragungselement 78. Die Anschläge 94, 96 bilden zum Beispiel auch eine untere Begrenzung für den Verstellweg des Wärmeübertragungselements 68. Zudem sind jeweils zwei Distanzelemente 34, 30 zwischen den einzelnen benachbarten Wärmeübertragungselementen 78, 68 vorgesehen, welche einem wegdefinierten Einstellen der Kompression auf die Reibbeläge 12, 52 vor und/oder während dem Härtevorgang dienen.

Die Distanzelemente 30, 34, die, wie anhand des Wärmeübertragungselements 68 angedeutet, in die Wärmeübertragungselemente 78, 68, 58, 48, 38, 18 eingreifen, stellen somit eine Begrenzung für den Verstellweg des jeweiligen Wärmeübertragungselements zu seinem Nachbarelement dar.

Die Spannvorrichtung 70 ist bei dem hier gewählten Ausführungsbeispiel so ausgebildet, dass eine Kompression, beziehungsweise eine auf die Schubstange 46 einwirkende Kraft 50, entgegen der Schwerkraft nach oben ausgeübt wird. Dies hat zum einen den Vorteil, dass das Feststellelement 44 am unteren, etwas kühleren Abschnitt des Spannrahmens 40 angeordnet werden kann und zum anderen bei einem Lösen des Feststellelements 44 und einem damit verbundenen Herunterfahren des Kolbens 46 sämtliche eingespannten Reibbeläge 12, 52 allein durch die Schwerkraft freigegeben werden.

Weiterhin sind auch andere Ausgestaltungen und Anordnungen des Spannrahmens 40 und der darin enthaltenen Wärmeübertragungselemente 18, 38, 48, 58, 68 , 78 denkbar, bei denen eine Kompression der eingespannten Reibbeläge 12, 52 nach unten in Richtung der Schwerkraft erfolgt oder bei denen die Wärmeübertragungselemente und die dazwischen eingespannten Reibbeläge um 90° gedreht angeordnet sind und eine Kompression im Wesentlichen in horizontaler Richtung erfolgt.

Bei derartigen Ausführungsformen können dann zusätzliche federelastische Elemente vorgesehen sein, mit Hilfe derer die Wärmeübertragungselemente 18, 38, 48, 58, 68, 78 am Ende des Härtevorgangs bei einer nicht mehr vorherrschender Kompression der Schubstange 46 zum Freigeben der Reibbeläge 12, 52 verschoben werden.

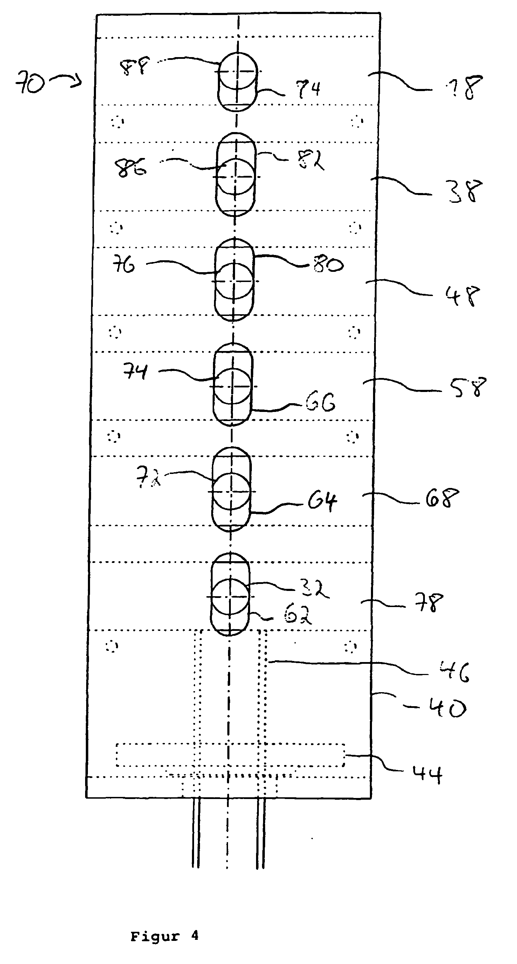

Figur 4 zeigt eine Seitenansicht der Vorrichtung 70 gemäß Figur 3. Hierin sind das Feststellelement 44 und die Schubstange 46 sowie die Wärmeübertragungselemente 78, 68, 58, 48, 38, 18 gestrichelt angedeutet. Die zu den Wärmeübertragungselementen 18, 38, 48, 58, 68, 78 zugehörigen Führungsbolzen 88, 86, 76, 74, 72 sind hier innerhalb der entsprechenden Langlöcher 84, 82, 80, 66, 64, 62 des Spannrahmens 40 angeordnet und ermöglichen ein aufwärts- und abwärtsgerichtetes Verschieben der jeweiligen Wärmeübertragungselemente 18, 38, 48, 58, 68, 78 innerhalb des durch die Langlöcher 84, 82, 80, 66, 64, 62 vorgegebenen Verstellwegs.

Die Langlöcher 84, 82, 80, 66, 64, 62 und die Führungsbolzen 88, 86, 76, 74, 72, 32 dienen vorzugsweise dem Halten der Wärmeübertragungselemente 18, 38, 48, 58, 68, 78, insbesondere dann, wenn keine Reibbeläge 12, 52 zwischen der Spannvorrichtung eingespannt sind. Die Langlochführung ermöglicht insbesondere ein einfaches Einführen und Anordnen zu härtender Reibbeläge 12, 52 in der Vorrichtung 70 und erlaubt zugleich ein einfaches Entnehmen bereits gehärteter Reibbeläge 12, 52 nach dem erfolgten Härtevorgang. Die Abstandsbegrenzung vor oder während des Härtevorgangs wird jedoch bevorzugt mittels der dafür ausgelegten Distanzelemente 30, 34 gemäß der Figuren 1 oder 3 realisiert.

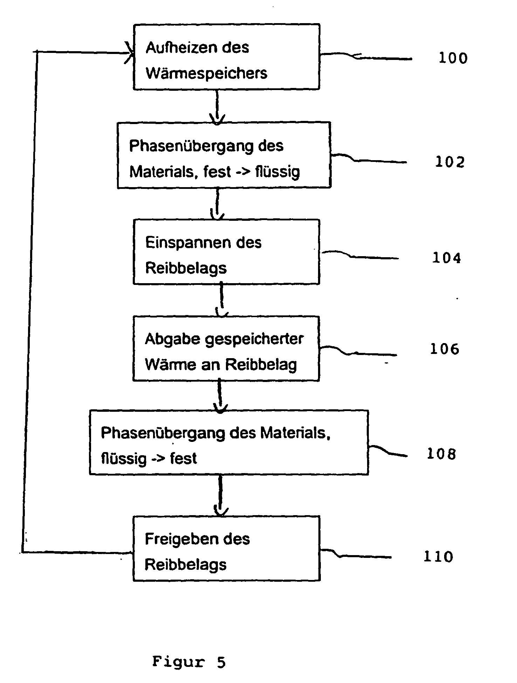

Figur 5 zeigt abschließend ein Flussdiagramm eines nach der Erfindung vorgesehenen Verfahrens zum Härten von Reibbelägen mit Hilfe wärmespeichernder Wärmeübertragungselemente. In einem ersten Schritt 100 werden die Wärmeübertragungselemente 18, 38, 48, 58, 68, 78 beispielsweise mittels eines heißen Luftstroms derart erwärmt, dass das Wärmespeichermaterial in Schritt 102 zumindest teilweise unter Aufnahme latenter Wärme von einem festen in einen flüssigen Aggregatzustand übergeht.

Nachdem mittels des Latentwärmespeichers in Schritt 102 eine erforderliche Wärmemenge in den einzelnen Wärmeübertragungselementen 18, 38, 48, 58, 68, 78 gespeichert wurde, werden dann im Schritt 104 die Reibbeläge 12, 52 mit den dazugehörigen Trägerplatten 14, 54 zwischen benachbarten Wärmeübertragungselementen 78, 68, 58 eingespannt. Dieses Einspannen kann entweder unter einem vorgegebenen Druck oder aber anhand eines vorgegebenen Verstellwegs für die einzelnen Wärmeübertragungselemente 78, 68, 58, 48, 38, 18 erfolgen.

Sobald die Reibbeläge 12, 52 in Anlageposition mit einem Wärmeübertragungselement 78, 68 gelangen, geben diese typischerweise einen Teil ihrer gespeicherten Wärmeenergie an die in Anlageposition befindlichen Reibbeläge 12, 52 zum Erwärmen der Reibbeläge 12, 52 auf die vorgegebene Härtetemperatur ab.

Während der Abgabe der gespeicherten Wärmeenergie an die eingespannten oder in Anlageposition befindlichen Reibbeläge 12, 52 wird die Temperatur der Wärmeübertragungselemente 78, 68, 58, 48, 38, 18 im wesentlichen durch das Freiwerden latenter Wärme des Wärmespeichermaterials konstant gehalten. Hierbei durchläuft das Wärmespeichermaterial in Schritt 108 den zum Schritt 102 reziproken Phasenübergang.

Nachfolgend, wenn die Reibbeläge 12, 52 auf die vorgegebene Härtetemperatur aufgeheizt wurden, werden diese für die Fortdauer des Härtevorgangs auf der Härtetemperatur gehalten. Das Aufheizen eingespannter Reibbeläge 12, 52 sowie das Halten der Reibbeläge auf der Härtetemperatur kann auch teilweise außerhalb eines Durchlaufofens erfolgen. Vorzugsweise werden die Reibbeläge 12, 52 außerhalb des Durchlaufofens in die Vorrichtung 10, 70 eingespannt und danach unverzüglich mitsamt der Vorrichtung 10, 70 dem Durchlaufofen zugeführt.

Im Durchlaufofen herrscht typischerweise eine Lufttemperatur, die höher als die Härtetemperatur ist, um ein schnelles und effizientes Aufheizen der Wärmeübertragungselemente 18, 38, 48, 58, 68, 78 zu erreichen. Wenn die Reibbeläge 12, 52 für die erforderlich Zeitdauer des Härtevorgangs auf der Härtetemperatur gehalten sind, verlassen diese typischerweise den Härteofen und werden schließlich in Schritt 110 freigegeben, indem das Feststellelement 44 des Spannrahmens 40 gelöst wird. Danach ist die Vorrichtung 10, 70 sofort wieder zum Einspannen weiterer zu härtender Reibbeläge 12, 52 bereit. und das Verfahren kann wieder mit Schritt 100 mit weiteren zu härtenden Reibbelägen 12, 52 durchgeführt werden.

### Bezugszeichenliste

- 10: Vorrichtung
- 12: Reibbelag
- 14: Trägerplatte
- 16: Grundelement
- 18: Wärmeübertragungselement
- 20: Heizrippen
- 22: Heizrippen
- 24: Öffnung
- 26: Öffnung
- 28: Öffnung
- 30: Distanzelement
- 32: Führungsbolzen
- 34: Distanzelement
- 36: Führungsbolzen
- 38: Wärmeübertragungselement
- 40: Spannrahmen
- 44: Feststellelement
- 46: Schubstange
- 48: Wärmeübertragungselement
- 50: Kraft
- 52: Reibbelag
- 54: Trägerplatte
- 58: Wärmeübertragungselement
- 62: Langloch
- 64: Langloch
- 66: Langloch
- 68: Wärmeübertragungselement
- 70: Vorrichtung
- 72: Führungsbolzen
- 74: Führungsbolzen
- 76: Führungsbolzen
- 78: Wärmeübertragungselement
- 80: Langloch
- 82: Langloch
- 84: Langloch
- 86: Bolzen
- 88: Bolzen
- 90: Anschlag
- 92: Anschlag
- 94: Anschlag
- 96: Anschlag

## Patentansprüche

1. Vorrichtung (10; 70) zum Härten von Reibbelägen (12, 52) für Brems- oder Kupplungsvorrichtungen von Fahrzeugen, mit zumindest einem Wärmeübertragungselement (18, 38, 48, 58, 68, 78), das in Anlageposition mit zumindest einem Reibbelag (12) bringbar und auf eine Härtetemperatur des Belags (12) aufheizbar ist, **dadurch gekennzeichnet, dass** das Wärmeübertragungselement (18, 38, 48, 58, 68, 78) mit einem Wärmespeichermaterial befüllbar ist, das im Bereich der Härtetemperatur zur Abgabe und/oder Aufnahme latenter Wärme ausgebildet ist, in dem es eine Phasenübergangstemperatur im Bereich der Härtetemperatur aufweist.

2. Vorrichtung nach Anspruch 1, **dadurch gekennzeichnet, dass** der zumindest eine Reibbelag (12, 52) zwischen das zumindest eine Wärmeübertragungselement (18) und ein Grundelement (16) einspannbar ist.

3. Vorrichtung nach Anspruch 2, **dadurch gekennzeichnet, dass** mehrere, in Reihe angeordnete Wärmeübertragungselemente (18, 38, 48, 58, 68, 78) zum Einspannen zumindest eines Reibbelags (12, 52) zwischen benachbarten Wärmeübertragungselementen (18, 38, 48, 58, 68, 78) vorgesehen sind.

4. Vorrichtung nach einem oder mehreren der Ansprüche 1 bis 3, **dadurch gekennzeichnet, dass** das Wärmeübertragungselement (18, 38, 48, 58, 68, 78) als Platte mit zumindest einem Hohlraum (24, 26, 28) zur Aufnahme des Wärmespeichermaterials ausgebildet ist.

5. Vorrichtung nach einem oder mehreren der vorhergehenden Ansprüche, **dadurch gekennzeichnet, dass** das Wärmeübertragungselement (18, 38, 48, 58, 68, 78) als Hohlprofil ausgebildet ist.

6. Vorrichtung nach Anspruch 4 oder 5, **dadurch gekennzeichnet, dass** der Hohlraum als eine mittels eines Deckels verschließbare Öffnung (24, 26, 28) zur Aufnahme des Wärmespeichermaterials ausgebildet ist.

7. Vorrichtung nach Anspruch 4 oder 5, **dadurch gekennzeichnet, dass** die Größe und/oder die Geometrie des Hohlraums (24, 26, 28) an die Wärmekapazität des Wärmespeichermaterials und/oder an die Größe und/oder Geometrie des Reibbelags (12, 52) angepasst ist.

8. Vorrichtung nach einem oder mehreren der Ansprüche 4 bis 6, **dadurch gekennzeichnet, dass** der Hohlraum (24, 26, 28) als verschweißbare Öffnung des Wärmeübertragungselements (18, 38, 48, 58, 68, 78) ausgebildet ist.

9. Vorrichtung nach einem oder mehreren der Ansprüche 2 bis 7, **dadurch gekennzeichnet, dass** mittels einer Spannvorrichtung (40) unter Einwirkung auf zumindest ein Wärmeübertragungselement (18, 38, 48, 58, 68, 78) eine über den Verstellweg des Wärmeübertragungselements (18, 38, 48, 58, 68, 78) vorgegebene Kompression auf den zumindest einen zwischen benachbarten Wärmeübertragungselementen (18, 38, 48, 58, 68, 78) oder zwischen Wärmeübertragungselement (18) und Grundelement (16) eingespannten Reibbelag (12, 52) ausübbar ist.

10. Vorrichtung nach Anspruch 9, **dadurch gekennzeichnet, dass** zum Festlegen des Verstellwegs ein Distanzelement (30, 34) zwischen benachbarten Wärmeübertragungselementen (68, 78) und/oder zwischen Wärmeübertragungselement (18) und Grundelement (16) vorgesehen ist.

11. Vorrichtung nach einem oder mehreren der Ansprüche 9 oder 10, **dadurch gekennzeichnet, dass** zum Festlegen des Verstellwegs die Spannvorrichtung zumindest einen Anschlag (90, 92, 94, 96) für zumindest ein Wärmeübertragungselement (18, 38, 48, 58, 68, 78) aufweist.

12. Vorrichtung nach einem oder mehreren der vorhergehenden Ansprüche, **dadurch gekennzeichnet, dass** zwischen benachbarten Wärmeübertragungselementen (18, 38) mindestens zwei Reibbeläge (12) nebeneinander anordenbar sind.

13. Vorrichtung nach einem oder mehreren der Ansprüche 9 bis 12, **dadurch gekennzeichnet, dass** das zumindest eine Wärmeübertragungselement (18, 38, 48, 58, 68, 78) über zumindest einen Führungsbolzen (32, 36, 72, 74, 76, 86, 88) verfügt, der zum Eingreifen in zumindest ein Langloch (62, 64, 66, 80, 82, 84) der Spannvorrichtung (40) ausgebildet ist.

14. Vorrichtung nach einem oder mehreren der vorhergehenden Ansprüche, **dadurch gekennzeichnet, dass** das zumindest eine Wärmeübertragungselement (18, 38, 48, 58, 68, 78) beim Aufheben einer Kompression unter Einwirkung seiner Gewichtskraft zur Freigabe des Reibbelags (12, 52) ausgebildet ist.

15. Vorrichtung nach einem der vorhergehenden Ansprüche, **dadurch gekennzeichnet, dass** als Wärmespeichermaterial Zink, Zinn, Aluminium, Legierungen mit Zink-, Zinn-, und/oder Aluminiumbestandteilen und/oder Wärmespeichermaterialien auf Salz- oder Paraffinbasis vorgesehen sind.

16. Verfahren zum Härten zumindest eines Reibbelags (12, 52) bei einer Härtetemperatur unter Verwendung zumindest eines mit einem Wärmespeichermaterial befüllbaren Wärmeübertragungselements (18, 38, 48, 58, 68, 78), wobei das Wärmespeichermaterial eine Phasenübergangstemperatur im Bereich der Härtetemperatur aufweist, mit folgenden Schritten:
- Aufheizen des Wärmeübertragungselements (18, 38, 48, 58, 68, 78) bis das Wärmespeichermaterial zumindest teilweise von einer ersten Phase in eine zweite Phase übergegangen ist,
- Anordnen des Reibbelags (12, 52) in eine Kontaktposition mit dem zumindest einen Wärmeübertragungselement (18, 38, 48, 58, 68, 78),
- Einbringen einer Wärmemenge vom Wärmeübertragungselement (18, 38, 48, 58, 68, 78) in den Reibbelag (12, 52) unter Ausnutzung einer durch Übergang von der zweiten in die erste Phase des Wärmespeichermaterials freigesetzten latenten Wärme, wobei die Temperatur des Wärmeübertragungselements (18, 38, 48, 58, 68, 78) im wesentlichen konstant gehalten wird.

17. Verfahren nach Anspruch 16, **dadurch gekennzeichnet, dass** die Temperatur des Wärmeübertragungselements (18, 38, 48, 58, 68, 78) beim Aufheizen durch die Aufnahme von Wärmeenergie des Wärmespeichermaterials beim Übergang von der ersten in die zweite Phase im Wesentlichen durch die Härtetemperatur begrenzt ist.

18. Verfahren nach Anspruch 16 oder 17, **dadurch gekennzeichnet, dass** das Wärmeübertragungselement (18, 38, 48, 58, 68, 78) als passives Wärmeübertragungselement ausgebildet ist und extern, insbesondere durch Luft in einem Ofen, aufgeheizt wird.

19. Verfahren nach einem oder mehreren der Ansprüche 16 bis 18, **dadurch gekennzeichnet, dass** der zumindest eine Reibbelag (12, 52) unter Einwirkung einer über einen Verstellweg des Wärmeübertragungselements (18, 38, 48, 58, 68, 78) vorgegebenen und über das zumindest eine Wärmeübertragungselement (18, 38, 48, 58, 68, 78) ausübbaren Kompression auf ein vorgegebenes Maß während des Härtevorgangs komprimiert wird.

20. Verfahren nach einem oder mehreren der Ansprüche 16 bis 19, **dadurch gekennzeichnet, dass** das Aufheizen des zumindest einen Wärmeübertragungselements (18, 38, 48, 58, 68, 78) in einem Durchlaufofen und das Anordnen des Reibbelags (12, 52) in die Anlageposition mit dem Wärmeübertragungselement außerhalb des Durchlaufofens stattfinden.

## Claims

1. Device (10; 70) for hardening friction linings (12, 52) for brake or clutch devices of vehicles, with at least one heat transmission element (18, 38, 48, 58, 68, 78) which can be brought into contact position with at least one friction lining (12) and is heatable to a hardening temperature of the lining (12), **characterised in that** the heat transmission element (18, 38, 48, 58, 68, 78) is fillable with a heat storage material which is constructed for delivery and/or reception of latent heat in the vicinity of the hardening temperature **in that** it has a phase transition temperature in the vicinity of the hardening temperature.

2. Device according claim 1, **characterised in that** the at least one friction lining (12, 52) can be clamped in place between the at least one heat transmission element (18) and a base element (16).

3. Device according to claim 2, **characterised in that** several heat transmission elements (18, 38, 48, 58, 68, 78), which are arranged in series, for clamping in place at least one friction lining (12, 52) between adjacent heat transmission elements (18, 38, 48, 58, 68, 78) are provided.

4. Device according to one or more of claims 1 to 3, **characterised in that** the heat transmission element (18, 38, 48, 58, 68, 78) is constructed as a plate with at least one cavity (24, 26, 28) for reception of the heat storage material.

5. Device according to one of more of the preceding claims, **characterised in that** the heat transmission element (18, 38, 48, 58, 68, 78) is constructed as a hollow section.

6. Device according to claim 4 or 5, **characterised in that** the cavity is formed as an opening (24, 26, 28), which is closable by means of a cover, for reception of the heat storage material.

7. Device according to claim 4 or 5, **characterised in that** the size and/or the geometry of the cavity (24, 26, 28) is or are adapted to the thermal capacity of the heat storage material and/or to the size and/or geometry of the friction lining (12, 52).

8. Device according to one or more of claims 4 to 6, **characterised in that** the cavity (24, 26, 28) is constructed as a weldable opening of the heat transmission element (18, 38, 48, 58, 68, 78).

9. Device according to one or more of claims 2 to 7, **characterised in that** by means of a clamping device (40) acting on at least one heat transmission element (18, 38, 48, 58, 68, 78) a compression - which is predetermined by way of the adjustment travel of the heat transmission element (18, 38, 48, 58, 68, 78) - can be exerted on the at least one friction lining (12, 52) clamped in place between adjacent heat transmission elements (18, 38, 48, 58, 68, 78) or between thermal transmission element (18) and base element (16).

10. Device according to claim 9, **characterised in that** in order to determine the adjustment travel a spacer element (30, 34) is provided between adjacent heat transmission elements (68, 78) and/or between heat transmission element (18) and base element (16).

11. Device according to one or more of claims 9 and 10, **characterised in that** in order to fix the adjustment travel the clamping device has at least one abutment (90, 92, 94, 96) for at least one heat transmission element (18, 38, 48, 58, 68, 78).

12. Device according to one of more of the preceding claims, **characterised in that** at least two friction linings (12) can be arranged adjacent to one another between adjacent heat transmission elements (18, 38).

13. Device according to one or more of claims 9 to 12, **characterised in that** at least one heat transmission element (18, 38, 48, 58, 68, has at least one guide bolt (32, 36, 72, 74, 86, 88) constructed for engagement in at least one slot (62, 64, 66, 80, 82, 84) of the clamping device (40).

14. Device according to one or more of the preceding claims, **characterised in that** the at least one heat transmission element (18, 38, 48, 58, 68, 78) is constructed for removing a compression under the action of its weight force for release of the friction lining (12, 52).

15. Device according to any one of the preceding claims, **characterised in that** zinc, tin, aluminium, alloys with zinc, tin and/or aluminium components and/or heat storage materials on a salt or paraffin base are provided as heat storage material.

16. Method of hardening at least one friction lining (12, 52) at a hardening temperature with use of at least one heat transmission element (18, 38, 48, 58, 68, 78) fillable with a heat storage material, wherein the heat storage material has a phase transition temperature in the vicinity of the hardening temperature, comprising the following steps:
- heating up the heat transmission element (18, 38, 48, 58, 68, 78) until the heat storage material has transferred at least partly from a first phase to a second phase,
- arranging the friction lining (12, 52) in a contact position with the at least one heat transmission element (18, 38, 48, 58, 68, 78), and
- introducing a heat quantity from the heat transmission element (18, 38, 48, 58, 68, 78) into the friction lining (12, 52) with use of a latent heat liberated by transition from the first the second phase of the heat storage material, wherein the temperature of the heat transmission element (18, 38, 48, 58, 68, 78) is kept substantially constant.

17. Method according to claim 16, **characterised in that** the temperature of the heat transmission element (18, 38, 48, 58, 68, 78) during heating up through the take-up of heat energy of the heat storage material on transition from the first to the second phase is limited substantially by the hardening temperature.

18. Method according to claim 16 or 17, **characterised in that** the heat transmission element (18, 38, 48, 58, 68, 78) is constructed as a passive heat transmission element and is heated up externally, particularly by air in an oven.

19. Method according to one or more of claims 16 to 18, **characterised in that** the at least one friction lining (12, 52) is compressed to a predetermined degree during the hardening process by the action of a compression predetermined by way of an adjustment travel of the heat transmission element (18, 38, 48, 58, 68, 78) and able to be exerted by way of the at least one heat transmission element (18, 38, 48, 58, 68, 78).

20. Method according to one or more of claims 16 to 19, **characterised in that** the heating up of the at least one heat transmission element (18, 38, 48, 58, 68, 78) takes place in a continuous oven and the arranging of the friction lining (12, 52) in the contact position with the heat transmission element takes place outside the continuous oven.

## Revendications

1. Appareil (10; 70) pour la réticulation de garnitures de friction (12, 52) pour des dispositifs de freinage et d'embrayage de véhicules, avec au moins un élément de transmission de chaleur (18, 38, 48, 58, 68, 78), qui peut être amené en position d'application avec au moins une garniture de friction (12) et qui peut être chauffé à une température de réticulation de la garniture (12), **caractérisé en ce que** l'élément de transmission de chaleur (18, 38, 48, 58, 68, 78) peut être rempli d'un matériau d'accumulation de chaleur, qui est conçu de façon à céder et/ou à prélever de la chaleur dans la région de la température de réticulation, **en ce qu'**il présente une température de transition de phase de l'ordre de la température de réticulation.

2. Appareil selon la revendication 1, **caractérisé en ce que** ladite au moins une garniture de friction (12, 52) peut être serrée entre ledit au moins un élément de transmission de chaleur (18) et un élément de base (16).

3. Appareil selon la revendication 2, **caractérisé en ce qu'**il est prévu plusieurs éléments de transmission de chaleur (18, 38, 48, 58, 68, 78) disposés en série pour serrer au moins une garniture de friction (12, 52) entre des éléments de transmission de chaleur voisins (18, 38, 48, 58, 68, 78).

4. Appareil selon l'une quelconque des revendications 1 à 3, **caractérisé en ce que** l'élément de transmission de chaleur (18, 38, 48, 58, 68, 78) se présente sous la forme d'une plaque avec au moins une cavité (24, 26, 28) destinée à recevoir le matériau d'accumulation de chaleur.

5. Appareil selon une ou plusieurs des revendications précédentes, **caractérisé en ce que** l'élément de transmission de chaleur (18, 38, 48, 58, 68, 78) se présente sous la forme d'un profilé creux.

6. Appareil selon la revendication 4 ou 5, **caractérisé en ce que** la cavité se présente sous la forme d'une ouverture (24, 26, 28), pouvant être fermée au moyen d'un couvercle, destinée à recevoir le matériau d'accumulation de chaleur.

7. Appareil selon la revendication 4 ou 5, **caractérisé en ce que** la grandeur et/ou la géométrie de la cavité (24, 26, 28) est adaptée à la capacité thermique du matériau d'accumulation de chaleur et/ou à la grandeur et/ou à la géométrie de la garniture de friction (12, 52).

8. Appareil selon une ou plusieurs des revendications 4 à 6, **caractérisé en ce que** la cavité (24, 26, 28) se présente sous la forme d'une ouverture de l'élément de transmission de chaleur (18, 38, 48, 58, 68, 78) apte à être soudée.

9. Appareil selon une ou plusieurs des revendications 2 à 7, **caractérisé en ce qu'**une compression prédéterminée sur la course de réglage de l'élément de transmission de chaleur (18, 38, 48, 58, 68, 78) peut être exercée sur ladite au moins une garniture de friction (12, 52) serrée entre des éléments de transmission de chaleur voisins (18, 38, 48, 58, 68, 78) ou entre un élément de transmission de chaleur (18) et un élément de base (16), par action sur au moins un élément de transmission de chaleur (18, 38, 48, 58, 68, 78) au moyen d'un dispositif de serrage (40).

10. Appareil selon la revendication 9, **caractérisé en ce qu'**il est prévu un élément d'écartement (30, 34) entre des éléments de transmission de chaleur voisins (68, 78) et/ou entre un élément de transmission de chaleur (18) et un élément de base (16) afin de fixer la course de réglage.

11. Appareil selon une ou plusieurs des revendications 9 ou 10, **caractérisé en ce que**, pour fixer la course de réglage, le dispositif de serrage présente au moins une butée (90, 92, 94, 96) pour au moins un élément de transmission de chaleur (18, 38, 48, 58, 68, 78).

12. Appareil selon une ou plusieurs des revendications précédentes, **caractérisé en ce qu'**au moins deux garnitures de friction (12) peuvent être disposées l'une à côté de l'autre entre des éléments de transmission de chaleur voisins (18, 38).

13. Appareil selon une ou plusieurs des revendications 9 à 12, **caractérisé en ce que** ledit au moins un élément de transmission de chaleur (18, 38, 48, 58, 68, 78) est muni d'au moins un boulon de guidage (32, 36, 72, 74, 76, 86, 88), qui est conçu de façon à s'engager dans au moins un trou oblong (62, 64, 66, 80, 82, 84) du dispositif de serrage (40).

14. Appareil selon une ou plusieurs des revendications précédentes, **caractérisé en ce que** ledit au moins un élément de transmission de chaleur (18, 38, 48, 58, 68, 78) est conçu de façon à libérer la garniture de friction (12, 52) sous l'action de son poids lors de la levée de la compression.

15. Appareil selon une ou plusieurs des revendications précédentes, **caractérisé en ce qu'**il est prévu comme matériau d'accumulation de chaleur du zinc, de l'étain, de l'aluminium, des alliages contenant des composants de zinc, d'étain et/ou d'aluminium et/ou des matériaux d'accumulation de chaleur à base de sels ou de paraffine.

16. Procédé pour la réticulation d'au moins une garniture de friction (12, 52) à une température de réticulation avec utilisation d'au moins un élément de transmission de chaleur (18, 38, 48, 58, 68, 78) pouvant être rempli de matériau d'accumulation de chaleur, dans lequel le matériau d'accumulation de chaleur présente une température de transition de phase de l'ordre de la température de réticulation, comportant les étapes suivantes:
- chauffage de l'élément de transmission de chaleur (18, 38, 48, 58, 68, 78) jusqu'à ce que le matériau d'accumulation de chaleur soit passé au moins en partie d'une première phase à une deuxième phase;
- placement de la garniture de friction (12, 52) en position de contact avec ledit au moins un élément de transmission de chaleur (18, 38, 48, 58, 68, 78);
- injection d'une quantité de chaleur de l'élément de transmission de chaleur (18, 38, 48, 58, 68, 78) dans la garniture de friction (12, 52) en utilisant une chaleur latente libérée par la transition du matériau d'accumulation de chaleur d'une deuxième phase à une première phase, la température de l'élément de transmission de chaleur (18, 38, 48, 58, 68, 78) étant maintenue essentiellement constante.

17. Procédé selon la revendication 16, **caractérisé en ce que** la température de l'élément de transmission de chaleur (18, 38, 48, 58, 68, 78) est limitée essentiellement par la température de réticulation lors du chauffage par le prélèvement d'énergie thermique du matériau d'accumulation de chaleur lors de la transition de la première à la deuxième phase.

18. Procédé selon la revendication 16 ou 17, **caractérisé en ce que** l'élément de transmission de chaleur (18, 38, 48, 58, 68, 78) est un élément de transmission de chaleur passif et il est chauffé extérieurement, en particulier par de l'air dans un four.

19. Procédé selon une ou plusieurs des revendications 16 à 18, **caractérisé en ce que** ladite au moins une garniture de friction (12, 52) est comprimée à un degré prédéterminé pendant l'opération de réticulation sous l'action d'une compression prédéterminée sur une course de réglage de l'élément de transmission de chaleur (18, 38, 48, 58, 68, 78) et pouvant être exercée par ledit au moins un élément de transmission de chaleur (18, 38, 48, 58, 68, 78).

20. Procédé selon au moins une des revendications 16 à 19, **caractérisé en ce que** le chauffage dudit au moins un élément de transmission de chaleur (18, 38, 48, 58, 68, 78) est effectué dans un four continu et le placement de la garniture de friction (12, 52) dans la position d'application avec l'élément de transmission de chaleur est effectué à l'extérieur du four continu.
